# EUROPEAN PATENT SPECIFICATION

(11) **EP 2 906 020 B1**
(45) Date of publication and mention of the grant of the patent: **21.12.2016**
(21) Application number: 14154473.4
(22) Date of filing: 10.02.2014
(51) Int. Cl.: H05B 6/64, A47J 37/06, H05B 6/80

(54) **Apparatus for cooking food products**
Vorrichtung zum Kochen von Nahrungsmittelprodukten
Appareil de cuisson d'aliments

(43) Date of publication of application: 12.08.2015
(73) Proprietor: Electrolux Professional S.p.A., 33170 Pordenone (IT)
(72) Inventor: Morassut, Alessandro, I-33170 Pordenone (IT); Simonato, Michele, I-33170 Pordenone (IT); Turco, Fabio, I-33170 Pordenone (IT)
(74) Representative: Electrolux Group Patents

(56) References cited:
- EP-A1- 2 233 838
- EP-A1- 2 329 751
- WO-A1-03/098972
- WO-A1-2014/005915
- US-A1- 2006 151 490

## Description

The present invention refers to the cookware field.

Widely known in the art are currently broilers, or griddles, that are used to cook food products of the most varied kind, such as hamburgers, toasted rolls, meat in general, and the like. For this purpose, griddles comprise at least one heating plate associated with one or more resistive heating elements.

A number of griddles to be found currently on the marketplace have - further to a lower or bottom heating plate on which the products to be cooked are placed - an upper or top heating plate that is adapted to be brought in proximity of the lower or bottom one so as to have the products cooked on both sides simultaneously, thereby reducing the overall time required to handle the same products.

According to solutions known in the art, a first resistive heating element may be located under the lower heating plate and a second resistive heating element may be located above the higher heating plate. This design is quite simple and effective, having the advantage of allowing an easy and fast maintenance, since the two heating plates may be easily removed for being cleaned.

Apparatuses of this kind, however, have a main drawback in that they are not capable of cooking the food products completely; in fact, such food products are usually just heated up or browned outside, while remaining substantially uncooked, *i.e*., in their raw state, inside. This drawback is exacerbated in case the food products to be cooked are large.

In order to solve this drawback, griddles designed to cook food products by exploiting a combination of heat produced by the resistive heating elements and heat produced by electromagnetic radiation in the microwave spectrum (hereinafter simply referred to as "microwave radiation") are also available in the market. Thanks to the action of the electromagnetic radiation in the microwave spectrum, which is able to deeply penetrate into the food products to be cooked, said apparatuses allow to evenly heat also the inner portions of such food products, improving the cooking quality and increasing the cooking speed. In order to exploit the microwave action benefits, said apparatuses have to include one or more microwave generators adapted to generate electromagnetic radiation in the microwave spectrum. The microwave generator(s) is(are) typically located under and/or at the side of the bottom heating plate.

In the present description and claims with "resistive heating element" it is intended any device adapted to provide heat by exploiting the Joule effect, *i.e*., the generation of heat produced by the passage of electric current across a conductor material. Conversely, the electromagnetic radiation in the microwave spectrum generated by a microwave generator element is adapted to provide heat by directly causing polarized molecules in the food to rotate and build up thermal energy (said process is known as dielectric heating).

For example, US 7,449,665, which has been filed by this same applicant, discloses an apparatus for cooking food products on both sides thereof, comprising a base member associated to a bottom heating surface, a first electric heating element located between the base member and the bottom heating surface, an upper movable member associated to a top heating surface, a second electric heating element located between said upper member and said top heating surface, and one or more microwave generators housed in the base member; when said upper member is lowered, the top heating surface comes to lie opposite to the bottom heating surface so as to form a cooking cavity therebetween. Said first electric heating element is separated from the bottom heating surface by a hollow space and the microwave generator is placed in such position, with the use of appropriate wave-guide means, as to allow the microwaves issuing therefrom to propagate towards said hollow space and, eventually, towards the bottom surface of said bottom heating surface.

In griddles like the one previously described, designed to exploit a combination of heat produced by resistive heating elements and heat produced by microwave radiation for cooking food products, the bottom heating plate is made of a material that is resistant to high temperatures, transparent or partially transparent to infrared radiation, as well as transparent or partially transparent to microwave radiation, such as quartz. In this way, heat irradiated by the resistive heating element(s) located under the bottom heating plate and microwave radiation generated by the microwave generator(s) located under and/or at the side of the bottom heating plate are able to reach the food supported by the bottom heating plate without being shielded by the latter.

However, a bottom heating plate made of quartz, although capable of being efficiently crossed by both infrared and microwave radiation, is not devoid of drawbacks.

Indeed, quartz is a material that is intrinsically fragile. Therefore, a heating plate made of quartz should be cleaned with great care, avoiding the use of harsh detergents and cleaning tools which cause an excessive rubbing force. However, users of griddles typically do not follow these recommendations, since a correct cleaning operation would require an excessive amount of time. Instead, heating plates are frequently cleaned using aggressive cleaning tools, such as steel wool pads or steel scouring pads, which may cause the formation of superficial micro-cracks, capable of propagating across the quartz heating plate up to bring the quartz heating plate to breakage.

Moreover, since quartz is a material having a low heat capacity, a heating plate made of quartz has a scarce thermal inertia. Therefore, once the heating plate is brought to a desired target temperature, if the boundary conditions are changed (e.g., when a new, cold, food product to be cooked is placed on the heating plate), the scarce thermal inertia of such material causes an abrupt decreasing in the heating plate temperature, lowering the cooking quality.

In order to reduce the occurrence of micro-cracks formation, a baking paper sheet, for example made of Polytetrafluoroethylene (PTFE), may be provided to cover the surface of the heating plate made of quartz, so that, during the cooking operations, the pieces of food to be cooked are not in direct contact with said surface. In this way, the surface of the heating plate made of quartz would get less dirty with the use, reducing the necessity of performing the abovementioned cleaning operations capable of causing the degradation of the heating plate if carried out exploiting harsh detergents and aggressive cleaning tools.

However, in order to maintain its effectiveness, said baking paper sheet should be replaced with a relatively high frequency (*e.g.*, once a day).

Moreover, by using baking paper sheets, the drawbacks caused by the intrinsic low heat capacity of the quartz are still not solved.

WO 03/098972 discloses a sandwich maker with microwave heating. The sandwich maker comprises a lower platen extending from a base, an opposing upper platen extending from an upper plate, a means for heating the platens, a microwave power source connected to a radiating element directed at the platens disposed within a microwave shield forming a cooking chamber. Optionally, the sandwich maker comprises a plurality of platens. A handle coupled to the upper plate causes the platens to come together and retract. Heating the platens causes the sandwich bread to toast while the microwave power heats the internal ingredients. WO 03/098972 also discloses a method for preparing a sandwich which comprises the steps of providing a cooking chamber, inserting the sandwich into the cooking chamber, closing the cooking chamber, applying conductive heat directly to the bread slices while simultaneously applying microwave energy, and thereafter, removing the processed sandwich.

In view of the above, the Applicant has faced the problem to improve the already known solutions for providing a cooking apparatus designed to exploit a combination of heat produced by the resistive heating elements and heat produced by electromagnetic radiation in the microwave spectrum, by solving, or at least reducing, the drawbacks caused by a bottom heating plate of the cooking apparatus that is made of quartz.

The Applicant has found that in a cooking apparatus designed to exploit a combination of heat produced by the resistive heating elements and heat produced by electromagnetic radiation in the microwave spectrum, if food products are cooked providing heat produced by the resistive heating elements through heat conduction instead of through infrared radiation, it is possible to use a bottom heating plate made of a material that is not affected (or at least that is less affected) by the abovementioned drawbacks.

An aspect of the present invention provides for an apparatus for cooking food products. The apparatus comprises a first heating plate adapted to support the food products, and a second heating plate adapted to face the food products during a cooking operation. The apparatus further comprises a first resistive heating element associated with the first heating plate and adapted to generate infrared radiation for heating the food products during the cooking operation, a second resistive heating element associated with the second heating plate and adapted to generate infrared radiation for heating the food products during the cooking operation, and at least one microwave generator element configured to selectively generate microwave radiation for heating the food products during the cooking operation. At least one among the first heating plate and the second heating plate is made of a material that is transparent or at least partially transparent to microwave radiations and at the same time not transparent to infrared radiation, in such a way that said at least one among the first heating plate and the second heating plate is adapted to increase its temperature by infrared radiation absorption to provide heat to the food products by heat conduction.

According to an embodiment of the present invention, said material is a ceramic material.

In this document, by "ceramic material" it is intended any compound comprising processed (*e.g*., sintered) ceramic particulate, in granular and/or fibrous form.

According to an embodiment of the present invention, said ceramic material is a ceramic material for which at least one among the following relationships is fulfilled:
- *K_{ic}*/*Eα* ≥ 0.3 K√m;
- *δ_{f}*/*Eα* ≥ 30 K;
- *kK_{ic}*/*Eα* ≥ 1 W/√m, and
- *kδ_{f}lEα* ≥ 30 W/m,
wherein:
- *K_{ic}* is the fracture toughness resistance coefficient;
- δ*_{f}* is the maximum tensile strength;
- *E* is the Young's modulus;
- α is the thermal expansion coefficient, and
- *k* is the thermal conductivity coefficient.

According to an embodiment of the present invention, said ceramic material is silicon nitride.

According to an embodiment of the present invention, said ceramic material is aluminum oxide.

Said ceramic material has a dielectric loss factor preferably lower than 10⁻¹, more preferably lower than 10⁻².

According to an embodiment of the present invention, the apparatus further comprises a base member associated to the first heating plate, and an upper member associated to the second heating plate. The upper member is pivotally joined to the base member so that the upper member is adapted to be moved between: a) a resting position in which the upper member is spaced apart from the base member, and b) a cooking position in which the upper member and the base member are closed against each other to form a cooking cavity wherein the food products are cooked. The apparatus further comprises a support frame mechanically coupled with the first heating plate for supporting the first heating plate. The support frame is preferably located on a top portion of the base member.

According to an embodiment of the present invention, the base member comprises a gasket member along the border of the first heating plate to close interstices between the first heating plate and the support frame.

According to an embodiment of the present invention, the base member comprises a microwave choke member surrounding the first heating plate to prevent microwave radiation to leak outside the apparatus.
**Figure 1** is a side sectional view of an apparatus for cooking food with the upper member thereof raised in a resting position according to an embodiment of the present invention;
**Figure 2** is a side sectional view of the apparatus of **Figure 1** with the upper member thereof lowered into a cooking position, and
**Figure 3** is an enlarged view of a portion of the apparatus of **Figures 1** and **2** showing how a border of the bottom heating plate is coupled with a support frame.

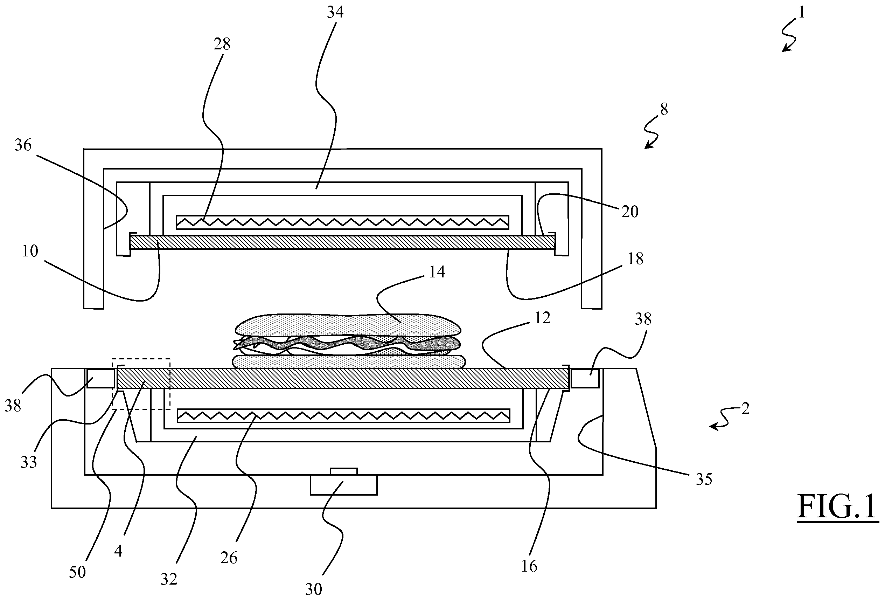

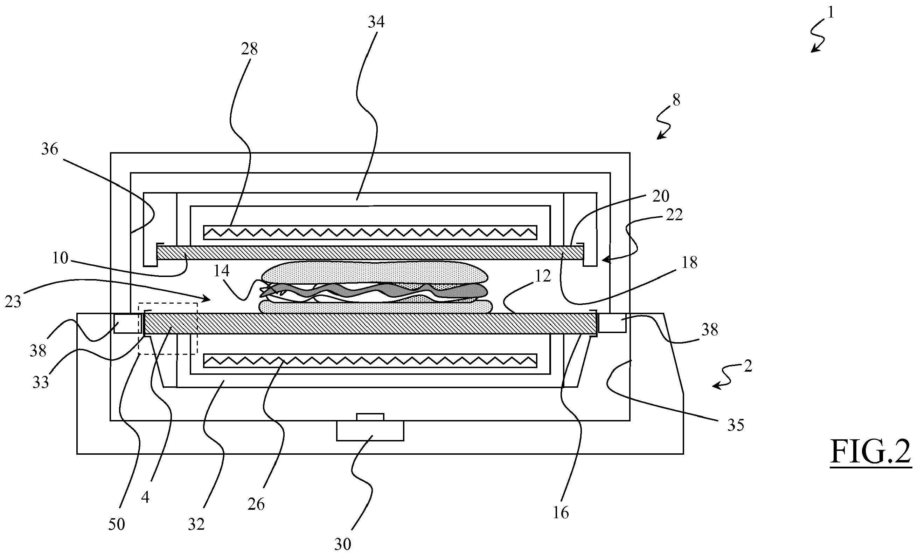

With reference to the drawings, **Figures 1** and **2** are side sectional views of an apparatus **1** for cooking food products on both sides thereof, such as a griddle, according to an embodiment of the present invention. The apparatus **1** comprises a base member **2** associated to a bottom heating plate **4**, and an upper member **8** associated to a top heating plate **10**. The bottom heating plate **4** comprises a top surface **12** adapted to support food products **14** to be cooked and an opposite bottom surface **16**. The top heating plate **10** comprises a bottom surface **18** adapted to face the food products **14** supported by the bottom heating plate **4** during the cooking operations, and an opposite top surface **20**. The bottom heating plate **4** is preferably located on top of the base member **2** and the top heating plate **10** is preferably located at the bottom of the upper member **8**.

Advantageously, the upper member **8** is pivotally joined (in a way that is not shown) to the base member **2** so that the upper member **8** may be moved between a raised, resting position (see **Figure 1**), in which the upper member **8** is spaced apart from the base member **2**, to a lowered, cooking position (see **Figure 2**), in which said upper member **8** and said base member **2** are closed against each other.

The kind of movement needed to lower the upper member **8** onto the base member **2** can for instance be a rotary one about a hinging pin provided on the base member **2** or a simple translational one, or a combination of both. Anyway, these details shall not be explained any further, owing to them being generally and widely known to all those skilled in the art.

Said base member **2** and said upper member **8**, when closed against each other in the cooking position as illustrated in **Figure 2**, are adapted to define - in the volume comprised therebetween - an inner compartment **22** housing both the bottom and top heating plates **4**, **10**. Moreover, when said base member **2** and said upper member **8** are closed against each other in the cooking position, a cooking cavity **23** is formed wherein food products **14** are actually cooked. Said cooking cavity **23** is delimited from above by the bottom surface **18** of the top heating plate **10**, and from below by the top surface **12** of the bottom heating plate **4**.

The base member **2** comprises one or more bottom resistive heating elements **26** (one, in the figures) arranged under the bottom heating plate **4** and operable to generate infrared radiation for heating the food products **14**. The upper member **8** comprises one or more top resistive heating elements **28** (one, in the figures) arranged above the top heating plate **10** and operable to generate infrared radiation for heating the food products **14**.

The apparatus **1** further comprises, inside said base member **2**, one or more (one, in the figures) microwave generator elements **30** configured to generate microwave radiation to be fed into the cooking cavity **23** for heating the food **14** supported by the bottom heating plate **4**. The microwave generator elements **30** are preferably located under and/or at the sides of the bottom heating plate **4**.

Expediently, the base member **2** comprises a partition element **32** made of thermally insulating but microwave transparent material, such as a ceramic material, which is arranged so as to extend in a position below the bottom resistive heating element **26** for thermally insulating the electric/electronic components housed in the base member **2** from the heat generated by the bottom resistive heating element **26** while at the same time allowing microwaves generated by the microwave generator element **30** to pass therethrough without any attenuating effect whatsoever. The bottom heating plate **4** is mechanically coupled with a, *e.g*., metallic, support frame **33**, located on a top portion of said base member **2** above said partition element **32**.

Similarly, the upper member **8** may comprise a partition element **34** made of thermally insulating material, which is arranged so as to extend in a position above the top resistive heating element **28**. The top heating plate **10** is coupled with said upper member **8** below the partition element **34**.

The base member **2** and the upper member **8** may be made of a metallic material so as to form a corresponding lower microwave shielding semi-shell **35** and a corresponding upper microwave shielding semi-shell **36**, respectively, designed and arranged to ensure that, once said base member **2** and said upper member **8** are closed against each other in the cooking position, the microwave radiation generated by the microwave generator element **30** is confined within the apparatus **1**. Alternatively, the base member **2** and/or the upper member **8** may be made of a non metallic material, such as plastic, with the inner walls thereof that are metalized so that, once the base member **2** and the upper member **8** are closed against each other in the cooking position, the microwave radiation generated by the microwave generator element **30** is still confined within the apparatus **1**.

Advantageously, the base member **2** comprises a metallic microwave choke member **38**, only schematically illustrated in the figures, surrounding the bottom heating plate **4** and extending parallel to the interstice that is formed between the upper member **8** and the base member **2** when the former is closed against the latter. The microwave choke member **38** comprises at least a choke channel (not illustrated) shaped so as to make microwave radiation to reflect against walls thereof so as to efficiently prevent microwave radiations from leaking outside the apparatus **1** through said interstice that is formed between the upper member **8** and the base member **2** when the former is closed against the latter.

According to an embodiment of the present invention, the bottom heating plate **4** is made of a material that is transparent or at least partially transparent to microwave radiations and at the same time not transparent to infrared radiation. In this way, while microwave radiation generated by the microwave generator element **30** may pass through the bottom heating plate **4**, the infrared radiation emitted by the resistive heating element **26** cannot pass through the bottom heating plate **4**, being instead absorbed by the latter. The infrared radiation absorbed by the bottom heating plate **4** causes the latter to increase its temperature. This allows food products **14** in contact with the bottom heating plate **4** to be cooked by heat conduction, *i.e.* through transfer of heat energy from the bottom heating plate **4** to said food products **14** due to the temperature gradient occurring between the former and the latter.

According to an embodiment of the present invention, the bottom heating plate **4** is made of a ceramic material.

Preferably, but not necessarily, the top heating plate **10** is made of a material that is transparent or partially transparent to infrared radiation, so that heat produced by the top resistive heating element **28** is able to reach the food **14** supported by the bottom heating plate **4**. Nevertheless, for the top heating plate **10** a material that is not transparent to infrared radiation can be used as well. In one possible embodiment, the top heating plate **10** is made of a material which is transparent or at least partially transparent to microwave radiations and at the same time not transparent to infrared radiation, such as a ceramic material. In another possible embodiment, in order to better confine microwave radiation within the inner compartment **22**, the top heating plate **10** is advantageously made of a material that is also non-transparent to microwave radiation.

Thanks to the presence of both the resistive heating elements **26**, **28** and the microwave generator element **30**, the apparatus **1** is in this way adapted to process any food product **14** that is placed upon said bottom heating plate **4** by both thermal effect and dielectric heating effect.

In fact, upon placing said food product **14** on the bottom heating plate **4**, all it takes is lowering said upper member **8** so as to close it on said base member **2** in such a way that the top heating plate **10** contacts the top side of the food product **14** and in such a way to ensure that the thereby formed inner compartment **22** features a tightly sealed construction enclosing the cooking cavity **23**. In this way, the cooking cavity **23** can be reached by the propagating microwave radiation that passes through said partition element **32** and bottom heating plate **4** in an ascending flow pattern, providing heat to the food product **14**.

Moreover, since the infrared radiation emitted by the bottom resistive heating element **26** is absorbed by the bottom heating plate **4**, said absorption causes the bottom heating plate **4** to increase its temperature. In this way, heat is transferred from the bottom heating plate **4** to the bottom side of the food product **14** in contact with the bottom heating plate **4** by heat conduction. In case the top heating plate **10** is made of a material that is not transparent to infrared radiation, the top heating plate **10** increases as well its temperature by infrared radiation absorption, and transfers heat to the top side of the food product **14** by heat conduction. In case instead the top heating plate **10** is made of a material that is transparent to infrared radiation, the food product **14** may be irradiated also by the infrared radiation emitted by the top resistive heating element **28**.

The use of a ceramic material for forming the bottom heating plate **4** is particularly advantageous since ceramic materials are less fragile than quartz. Indeed, even if cleaned using aggressive cleaning tools, a bottom heating plate **4** made of ceramic material does not exhibit the formation of micro-cracks capable of extending across the bottom heating plate **4** up to bring the latter to break. Moreover, since ceramic materials have a higher heat capacity compared to quartz, a heating plate made of ceramic material exhibits a higher thermal inertia, ranging from approximately 1,5 to 2 times the thermal inertia of quartz. Therefore, a heating plate made of ceramic material allows to maintain a desired cooking temperature in a more stable manner even if new, cold, food products **14** are placed thereon, offering a better cooking quality. Furthermore, since with a bottom heating plate **4** made of ceramic material the food receives heat from the bottom resistive heating element **26** by heat conduction instead of by infrared irradiation, the browning of the surface of the food product **14** is advantageously increased.

According to an embodiment of the present invention, the top surface **12** of the bottom heating plate **4** may be made nonstick by changing the surface morphology of the top surface **12**. For example, it is possible to modify its porosity and/or its roughness during the manufacturing process so as to achieve such nonstick properties.

According to an embodiment of the present invention, the choice of the ceramic material forming the bottom heating plate **4** is carried out by considering both the dielectric loss factor and the thermal shock resistance of the material. The ceramic material forming the bottom heating plate **4** should have a sufficiently low dielectric loss factor in order to allow that the bottom heating plate **4** is sufficiently transparent to microwave radiation, reducing thus the electromagnetic energy losses, as well a sufficiently high thermal shock resistance to avoid that the bottom heating plate **4** mechanically degrades with the formation of micro-cracks when subjected to high temperature variations.

The ceramic material forming the bottom heating plate **4** is selected to have a dielectric loss factor preferably lower than 10⁻¹, and more preferably lower than 10⁻².

According to an embodiment of the present invention, the ceramic material forming the bottom heating plate **4** is selected to have a sufficiently high thermal shock resistance not to mechanically degrade with the formation and/or the propagation of micro-cracks when subjected to temperature variations higher than 100°C.

According to an embodiment of the present invention, said ceramic material is selected based on its fracture toughness resistance coefficient *K_{ic}* and/or its maximum tensile strength δ*f*. According to an embodiment of the present invention, said ceramic material having such sufficiently high thermal shock resistance is a ceramic material for which at least one among the following relationships is fulfilled:
1) *K_{ic}*/*Eα* ≥ 0.3 K√m;
2) *δ_{f}*/*Eα* ≥ 30 K;
3) *kK_{ic}*/*Eα* ≥ 1 W/√m, and
*4) kδ_{f}*/*Eα* ≥ 30 W/m,
wherein *E* is the Young's modulus, *α* is the thermal expansion coefficient, and *k* is the thermal conductivity coefficient. As it is known to those skilled in the art, *K_{ic}*/*Eα, δ_{f}*/*Eα*, *kK_{ic}*/*Eα* and *kδ_{f}*/*Eα*, are indexes that provide a description of the thermal shock resistance of a material.

According to an embodiment of the present invention, the bottom heating plate **4** is made of silicon nitride. Silicon nitride is a material that fulfills all the four abovementioned relationships 1) - 4).

According to another embodiment of the present invention, the bottom heating plate **4** is made of aluminum oxide processed in such a way to fulfill at least one among the four abovementioned relationships 1) - 4). Unlike the silicon nitride, which always fulfills all the four relationships 1) - 4), there exist different types of aluminum oxide processed in different types, fulfilling a different number of relationships among the relationships 1) - 4). For example, there exist aluminum oxide types processed to have a crystalline structure such to fulfill only relationships 1) and 2), or such to fulfill only relationship 1).

Since both silicon nitride and aluminum oxide have a dielectric loss factor lower than 10⁻¹, a bottom heating plate **4** made of one of said materials is sufficiently transparent to the microwave radiation to allow microwave radiation generated by the microwave generator elements **30** to efficiently reach food products **14** placed on the bottom heating plate **4**.

A bottom heating plate **4** made of silicon nitride has a thermal shock resistance such to sustain high thermal shocks without causing the formation of micro-cracks.

A bottom heating plate **4** made of aluminum oxide processed to fulfill at least one among the four abovementioned relationships 1) - 4), has a thermal shock resistance such to allow the formation of micro-cracks when the bottom heating plate **4** is subjected to high thermal shocks, but said micro-cracks do not propagate across the bottom heating plate **4**, avoiding the latter to break.

Silicon nitride and aluminum oxide have a mechanical resistance that is higher than the one of the quartz. A bottom heating plate **4** made of silicon nitride or aluminum oxide is also strongly resistant to mechanical shocks. Indeed, the peculiar microstructure of said materials allows the plate to absorb the energy of said mechanical shocks through the generation of corresponding micro-cracks, with said micro-cracks that do not propagate across the bottom heating plate **4**, preserving the integrity thereof.

Moreover, silicon nitride has a heat capacity that is up to 50% higher than the heat capacity of quartz, while aluminum oxide has a heat capacity that is up to 100% higher than the heat capacity of quartz.

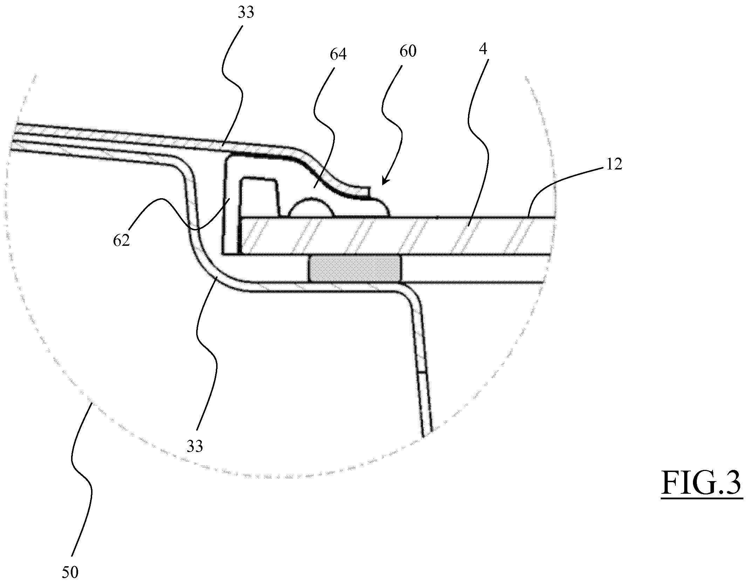

**Figure 3** is an enlarged view of a portion - identified in **Figures 1** and **2** with reference **50** - of the apparatus **1** showing how a border of the bottom heating plate **4** may be coupled with the support frame **33**.

According to such embodiment, a gasket member **60** is provided along the border of the bottom heating plate **4**, for example between the bottom heating plate **4** and the microwave choke member **38** (not illustrated in **Figure 3**) to close any possible interstice between the bottom heating plate **4** and the support frame **33**. In this way, it is avoided that fats and food residuals accumulate within said interstices, strongly reducing the formation of hot spots capable of attracting microwaves with consequence dangerous uncontrolled local heat increase.

According to the disclosed embodiment, the gasket member **60** has a first portion **62** extending perpendicular to the top surface **12** of the bottom heating plate **4** and in contact with the border of the bottom heating plate **4**, and a second portion **64** which extends between a portion of the top surface **12** and a portion of the support frame **33**, contacting both of them.

Naturally, in order to satisfy local and specific requirements, a person skilled in the art may apply to the solution described above many logical and/or physical modifications and alterations.

For example, although in the present description reference has been explicitly made to the use of materials that are transparent or at least partially transparent to microwave radiations and at the same time not transparent to infrared radiation for forming only the bottom heating plate, similar considerations apply if such materials are used for forming only the top heating plate, or for forming both the bottom heating plate and the top heating plate.

## Claims

1. An apparatus (**1**) for cooking food products (**14**), the apparatus (**1**) comprising:
- a first heating plate (**4**) adapted to support the food products (**14**);
- a second heating plate (**10**) adapted to face the food products (**14**) during a cooking operation;
- a first resistive heating element (**26**) associated with the first heating plate (**4**) and adapted to generate infrared radiation for heating the food products (**14**) during the cooking operation;
- a second resistive heating element (**28**) associated with the second heating plate (**10**) and adapted to generate infrared radiation for heating the food products (**14**) during the cooking operation, and
- at least one microwave generator element (**30**) configured to selectively generate microwave radiation for heating the food products (**14**) during the cooking operation, wherein:
at least one among the first heating plate (**4**) and the second heating plate (**10)** is made of a material that is transparent or at least partially transparent to microwave radiations and at the same time not transparent to infrared radiation, in such a way that said at least one among the first heating plate (**4**) and the second heating plate (**10**) is adapted to increase its temperature by infrared radiation absorption to provide heat to the food products (**14**) by heat conduction,
**characterized in that**
said material is a ceramic material for which at least one among the following relationships is fulfilled:
- *K_{ic}*/*Eα* ≥ 0.3 K√m;
- *δ_{f}*/*Eα* ≥ 30 K;
- *kK_{ic}*/*Eα* ≥ 1 W/√m, and
- *kδ_{f}*/*Eα* ≥ 30 W/m,
wherein:
- *K_{ic}* is the fracture toughness resistance coefficient;
- δ*_{f}* is the maximum tensile strength;
- *E* is the Young's modulus;
- α is the thermal expansion coefficient, and
- *k* is the thermal conductivity coefficient.

2. The apparatus (**1**) of claim 1, wherein said ceramic material is silicon nitride.

3. The apparatus (**1**) of claim 1, wherein said ceramic material is aluminum oxide.

4. The apparatus (**1**) of any one among the preceding claims, wherein said ceramic material is a ceramic material having a dielectric loss factor lower than 10⁻¹.

5. The apparatus (**1**) of claim 4, wherein said ceramic material is a ceramic material having a dielectric loss factor lower than 10⁻².

6. The apparatus (**1**) of any one among the preceding claims, further comprising:
- a base member (**2**) associated to the first heating plate (**4**);
- an upper member (**8**) associated to the second heating plate (**10**), the upper member (**8**) being pivotally joined to the base member (**2**) so that the upper member (**8**) is adapted to be moved between:
a) a resting position in which the upper member (**8**) is spaced apart from the base member (**2**), and
b) a cooking position in which the upper member (**8**) and the base member (**2**) are closed against each other to form a cooking cavity (**23**) wherein the food products (**14**) are cooked;
- a support frame (**33**) associated to the base member (**2**) and mechanically coupled with the first heating plate (**4**) for supporting the first heating plate (**4**).

7. The apparatus (**1**) of claim 6, wherein the base member (**2**) comprises a gasket member (**60**) along the border of the first heating plate (**4**) to close interstices between the first heating plate (**4**) and the support frame (**33**).

8. The apparatus (**1**) of any one among claims 6 to 7, wherein the base member (**2**) comprises a microwave choke member (**38**) surrounding the first heating plate (**4**) to prevent microwave radiation to leak outside the apparatus (**1**).

## Patentansprüche

1. Vorrichtung **(1)** zum Kochen von Nahrungsmittelprodukten **(14)**, wobei die Vorrichtung **(1)** Folgendes umfasst:
- eine erste Heizplatte **(4)** die zur Unterstützung der Nahrungsmittelprodukte **(14)** ausgelegt ist;
- eine zweite Heizplatte **(10)**, die dazu ausgelegt ist, während eines Kochvorgangs den Nahrungsmittelprodukten **(14)** gegenüberzuliegen;
- ein erstes Widerstandsheizelement **(26)**, das mit der ersten Heizplatte **(4)** in Zusammenhang steht und dazu ausgelegt ist, Infrarotstrahlung zum Erhitzen der Nahrungsmittelprodukte **(14)** während des Kochvorgangs zu erzeugen;
- ein zweites Widerstandsheizelement **(28)**, das mit der zweiten Heizplatte **(10)** in Zusammenhang steht und dazu ausgelegt ist, Infrarotstrahlung zum Erhitzen der Nahrungsmittelprodukte **(14)** während des Kochvorgangs zu erzeugen, und
- wenigstens ein Mikrowellengeneratorelement **(30)**, das dazu ausgelegt ist, selektiv Mikrowellenstrahlung zum Erhitzen der Nahrungsmittelprodukte **(14)** während des Kochvorgangs zu erzeugen,
wobei:
die erste Heizplatte **(4)** und/oder die zweite Heizplatte **(10)** aus einem Material gefertigt ist, das für Mikrowellenstrahlungen transparent oder wenigstens teilweise transparent ist und das gleichzeitig für Infrarotstrahlung nicht transparent ist, so dass die erste Heizplatte **(4)** und/oder die zweite Heizplatte **(10)** dazu ausgelegt ist, ihre Temperatur durch Absorption von Infrarotstrahlung zu erhöhen, um durch Wärmeableitung Wärme für die Nahrungsmittelprodukte **(14)** bereitzustellen,
**dadurch gekennzeichnet, dass** das Material ein Keramikmaterial ist, für das wenigstens eine der folgenden Beziehungen erfüllt ist:
- *K_{ic}*/*Eα* ≥ 0,3 K√m;
- *δ_{f}*/*Eα* ≥ 30 K;
- *kK_{ic}*/*Eα* ≥ 1 W/√m, und
- *kδ_{f}*/*Eα* ≥ 30 W/√m,
wobei:
- *K_{ic}* der Bruchzähigkeitswiderstandskoeffizient ist;
- δ*_{f}* die maximale Zugfestigkeit ist;
- E der Young-Modul ist;
- α der Wärmeausdehnungskoeffizient ist, und
- *k* die Wärmeleitzahl ist.

2. Vorrichtung **(1)** nach Anspruch 1, wobei das Keramikmaterial Siliziumnitrid ist.

3. Vorrichtung **(1)** nach Anspruch 1, wobei das Keramikmaterial Aluminiumoxid ist.

4. Vorrichtung **(1)** nach einem der vorhergehenden Ansprüche, wobei das Keramikmaterial ein Keramikmaterial mit einem dielektrischen Verlustfaktor von weniger als 10⁻¹ ist.

5. Vorrichtung **(1)** nach Anspruch 4, wobei das Keramikmaterial ein Keramikmaterial mit einem dielektrischen Verlustfaktor von weniger als 10⁻² ist.

6. Vorrichtung **(1)** nach einem der vorhergehenden Ansprüche, ferner umfassend:
- ein mit der ersten Heizplatte **(4)** in Zusammenhang stehendes Basiselement **(2)**;
- ein mit der zweiten Heizplatte **(10)** in Zusammenhang stehendes oberes Element **(8)**, wobei das obere Element **(8)** schwenkbar mit dem Basiselement **(2)** verbunden ist, so dass das obere Element **(8)** ausgelegt ist für eine Bewegung zwischen:
a) einer Ruheposition, in der das obere Element **(8)** im Abstand von dem Basiselement **(2)** angeordnet ist, und
b) einer Kochposition, in der das obere Element **(8)** und das Basiselement **(2)** aneinander geschlossen sind, um einen Garraum **(23)** zu bilden, in dem die Nahrungsmittelprodukte **(14)** gegart werden;
- einen Stützrahmen **(33)**, der mit dem Basiselement **(2)** in Zusammenhang steht und zur Unterstützung der ersten Heizplatte **(4)** mechanisch mit der ersten Heizplatte **(4)** verbunden ist.

7. Vorrichtung **(1)** nach Anspruch 6, wobei das Basiselement **(2)** ein Dichtungselement (60) entlang der Grenze der ersten Heizplatte **(4)** umfasst, um Zwischenräume zwischen der ersten Heizplatte **(4)** und dem Stützrahmen **(33)** zu schließen.

8. Vorrichtung **(1)** nach einem der Ansprüche 6 bis 7, wobei das Basiselement **(2)** ein Mikrowellendrosselelement **(38)** umfasst, das die erste Heizplatte **(4)** umgibt, um Austreten von Mikrowellenstrahlung aus der Vorrichtung **(1)** zu verhindern.

## Revendications

1. Appareil (1) destiné à cuire des produits alimentaires (14), l'appareil (1) comprenant :
- une première plaque chauffante (4) adaptée pour supporter les produits alimentaires (14) ;
- une seconde plaque chauffante (10) adapté pour faire face aux produits alimentaires (14) durant l'opération de cuisson ;
- un premier élément chauffant résistif (26) associé à la première plaque chauffante (4) et adapté pour générer un rayonnement infrarouge pour chauffer les produits alimentaires (14) durant l'opération de cuisson ;
- un second élément chauffant résistif (28) associé à la seconde plaque chauffante (10) et adapté pour générer un rayonnement infrarouge pour chauffer les produits alimentaires (14) durant l'opération de cuisson, et
- au moins un élément générateur de micro-ondes (30) configuré pour générer sélectivement un rayonnement micro-onde pour chauffer les produits alimentaires (14) durant l'opération de cuisson, dans lequel :
au moins l'une de la première plaque chauffante (4) et de la seconde plaque chauffante (10) est réalisée en un matériau qui est transparent ou au moins partiellement transparent au rayonnement micro-onde et en même temps non transparent au rayonnement infrarouge, de telle sorte que ladite au moins l'une de la première plaque chauffante (4) et de la seconde plaque chauffante (10) soit adaptée pour augmenter sa température par absorption du rayonnement infrarouge afin d'apporter de la chaleur aux produits alimentaires (14) par conduction thermique,
caractérisé ce que ledit matériau est un matériau céramique pour lequel au moins l'une des relations suivantes est satisfaite :
- *K_{ic}*/*Eα* ≥ 0,3 K√m ;
- *δ_{f}*/*Eα* ≥ 30 K ;
- *kK_{ic}*/*Eα* ≥ 1 w/√m, et
- *kδ_{f}*/*Eα* ≥ 30 W/m,
dans lequel :
- *X_{ic}* est le coefficient de ténacité à la fracture
;
δ*_{f}* est la résistance maximum à la traction ;
- *E* est le module de Young ;
- α est le coefficient de dilatation thermique ;
et
- *k* est le coefficient de conductivité thermique.

2. Appareil (1) selon la revendication 1, dans lequel ledit matériau céramique est du nitrure de silicium.

3. Appareil (1) selon la revendication 1, dans lequel ledit matériau céramique est de l'oxyde d'aluminium.

4. Appareil (1) selon l'une quelconque des revendications précédentes, dans lequel ledit matériau céramique est un matériau céramique ayant un facteur de perte diélectrique inférieur à 10⁻¹.

5. Appareil (1) selon la revendication (4), dans lequel ledit matériau céramique est un matériau céramique ayant un facteur de perte diélectrique inférieur à 10⁻².

6. Appareil (1) selon l'une quelconque des revendications précédentes, comprenant en outre :
- un élément de base (2) associé à la première plaque chauffante (4) ;
- un élément supérieur (8) associé à la seconde plaque chauffante (10), l'élément supérieur (8) étant joint de manière pivotante à l'élément de base (2) de telle sorte que l'élément supérieur (8) soit adapté pour être déplacé entre :
a) une position de repos à laquelle l'élément supérieur (8) est espacé de l'élément de base (2), et
b) une position de cuisson à laquelle l'élément supérieur (8) et l'élément de base (2) sont fermés l'un contre l'autre pour former une cavité de cuisson (23) dans laquelle les produits alimentaires (14) sont cuits ;
- un cadre de support (33) associé à l'élément de base (2) et couplé mécaniquement à la première plaque chauffante (4) pour supporter la première plaque chauffante (4).

7. Appareil (1) selon la revendication 6, dans lequel l'élément de base (2) comprend un élément de joint (60) le long de la bordure de la première plaque chauffante (4) pour clore les interstices entre la première plaque chauffante (4) et le cadre de support (33).

8. Appareil (1) selon l'une quelconque des revendications 6 à 7, dans lequel l'élément de base (2) comprend un élément d'écran micro-ondes (38) qui entoure la première plaque chauffante (4) pour empêcher la fuite du rayonnement micro-onde hors de l'appareil (1).
